# EUROPÄISCHE PATENTSCHRIFT

(11) **EP 0 919 432 B1**
(45) Veröffentlichungstag und Bekanntmachung des Hinweises auf die Patenterteilung: **17.09.2003**
(21) Anmeldenummer: 98204041.2
(22) Anmeldetag: 30.11.1998
(51) Int. Cl.: B60P 3/14, H04N 5/28

(54) **Übertragungswagen**
Transmitting vehicle
Véhicule de transmission

(30) Priorität: 01.12.1997 DE 19753018
(43) Veröffentlichungstag der Anmeldung: 02.06.1999
(73) Patentinhaber: BTS Holding International B.V., 4827 HG Breda (NL)
(72) Erfinder: Kloos, Peter, Dipl.-Ing., Röntgenstrasse 24, 22335 Hamburg (DE); Gottwald, Dirk, Dipl.-Ing., Röntgenstrasse 24, 22335 Hamburg (DE); Rousseau, Jean-Jacques, Ing., Röntgenstrasse 24, 22335 Hamburg (DE)
(74) Vertreter: Rossmanith, Manfred, Dr.

(56) Entgegenhaltungen:
- DE-B- 1 201 191
- US-A- 2 177 394
- US-A- 2 801 878
- US-A- 5 280 985
- BIGRAS ET AL: "HDTV Mobile teleproduction unit" SMPTE JOURNAL, Bd. 101, Nr. 2, 1. Februar 1992, Seiten 83-89, XP000252754

## Beschreibung

Die Erfindung bezieht sich auf einen Übertragungswagen, z.B. auf einen Fernsehübertragungswagen, mit einem Kerngehäuse und mit auf beiden Längsseiten quer zur Längserstreckung ein- und ausfahrbar angeordneten Zusatzgehäusen.

Derartige Übertragungswagen mit entweder auf einer Längsseite oder auf beiden Längsseiten des Kerngehäuses ein- bzw. ausschiebbar angeordneten Zusatzgehäusen sind bekannt. Diese Zusatzgehäuse sind während der Fahrt des Übertragungswagens in den Wagen eingeschoben. Sobald der Übertragungswagen seinen gewünschten Standort erreicht hat, werden zur Vergrößerung des Innenraumes die Zusatzgehäuse herausgezogen. An anderer Stelle des Übertragungswagens mitgeführte Treppen werden sodann an den Stirnseiten der Zusatzgehäuse angelegt, um das Innere des Übertragungswagens leicht erreichen zu können.

Durch die DE 105 04 251 A1 ist z.B. ein Übertragungswagen bekannt geworden, der an seiner einen Längsseite ein ein- und ausschiebbares Zusatzgehäuse, d.h. ein Ausschubteil, besitzt. Dieses Ausschubteil ist niedriger als die Höhe des Kerngehäuses und erstreckt sich aus Stabilitätsgründen nur über einen Teil der Länge des Kerngehäuses. Das Ausschubteil besitzt einen durchgehenden Boden, der im ausgezogenen Zustand mit dem Boden des Kerngehäuses in einer Ebene liegt. Im eingeschobenen Zustand sind klappbar ausgebildete Bodenelemente hochgeklappt und befinden sich in einem freien Durchgang des Übertragungswagens.

Durch die US-PS 2,901,282 ist ein Wohnwagen mit an einer Seite angeordnetem Ausschubteil bzw. Zusatzgehäuse bekannt geworden, dessen Bodenteil im eingeschobenen Zustand hochgeklappt und dessen Deckenteil die Decke des Kerngehäuses übergreift. Eine ähnliche Bauweise ist durch die DE-AS 1 201 191 bekannt geworden, wobei jedoch zwei seitliche Kastenhälften vorgesehen sind, die symmetrisch zur Längsachse des Fahrgestelles angeordnet sind und sich jeweils aus wenigstens einer Stirnwand, einer Längsseitenwand und einem Dachteil zusammensetzen. Darüber hinaus ist wenigstens eine dritte, in Querrichtung angeordnete Kastenhälfte vorgesehen, welche nur in Längsrichtung beweglich ist.

Aus der US-A-2 801 878 ist ein Wohnanhänger bekannt, der zwei seitlich angeordnete, ausziehbare Zusatzgehäuse aufweist, welche sich über die gesamte Länge und Höhe des Wohnanhängers erstrecken.

Aus der US-A 2 177 394 ist ein Wohnanhänger bekannt, welche zwei seitlich angeordnete, ausziehbare Zusatzgehäuse aufweist, welche sich über die gesamte Höhe des Wohnanhängers erstrecken und welcher klappbare Bodenflächen zur Erzielung eines ebenen Bodens im ausgefahrenen Zustand aufweist.

Der Erfindung liegt die Aufgabe zugrunde, bei einem Übertragungswagen der eingangs genannten Art die Zusatzgehäuse derart auszubilden und anzuordnen, dass der nutzbare Rauminhalt erheblich vergrößert wird und eine wirksame Wärmeabfuhr von in den Zusatzgehäusen in Geräteschränken eingebauten Geräten bei ausgefahrenen Zusatzgehäusen ermöglicht wird.

Diese Aufgabe wird bei einem Übertragungswagen der eingangs genannten Art dadurch gelöst, dass die an beiden Seiten angeordneten Zusatzgehäuse sich über die gesamte Länge und Höhe des Kerngehäuses erstrecken und dass die zum Kerngehäuse hin offenen Zusatzgehäuse mindestens mit ihren Decken- und Stirnwänden das Kerngehäuse beim Ein- und Ausfahren umgreifen. Im Gegensatz zu bekannten Übertragungswagen erstrecken sich somit die Zusatzgehäuse über die gesamte Länge und über die gesamte Höhe des Kerngehäuses, wodurch eine maximal mögliche Ausnutzung des Raumes möglich ist. Dies wird dadurch ermöglicht, dass die zum Kerngehäuse hin offenen Zusatzgehäuse erfindungsgemäß das Kerngehäuse umgreifen, wodurch die erforderliche Stabilität gewährleistet ist. Bei bekannten Ubertragungswagen werden die seitlich angeordneten Zusatzgehäuse in das Kerngehäuse eingefahren und müssen daher aus statischen Gründen sowohl in der Länge als auch in der Höhe beschränkt werden. Dies bedeutet, dass bei dieser Technik die gesamte Länge eines Übertragungswagens bei den bekannten Bauarten niemals ausgenutzt werden konnte. Dieser Nachteil wird gemäß der Erfindung dadurch behoben, dass die beiden Zusatzgehäuse von den Seiten her über das Kerngehäuse geschoben werden und dieses in zusammengeschobenem Zustand mindestens im Bereich der Decke und der Stirnseiten praktisch wie eine Außenhaut umschließen, die durch einen umlaufenden Längsspalt geteilt ist. Durch eine derartige Bauweise ergibt sich nahezu eine Verdoppelung der Grundfläche gegenüber dem Kerngehäuse. Dadurch, dass die Zusatzgehäuse auch in der Höhe gegenüber bekannten Bauweisen vergrößert sind, ergibt sich eine bessere Ausnutzung des Bauraumes. Da bekannte Übertragungswagen im Kerngehäuse in der Regel im Deckenbereich eine abgesenkte Decke aufweisen, oberhalb welcher Lüftungsgeräte angeordnet sind, war schon aus diesem Grunde bei den bekannten Bauweisen eine beschränkte Höhe der Zusatzgehäuse erforderlich. Dieser Nachteil wird bei der Erfindung auf einfache Weise behoben. Ein weiterer Vorteil der erfindungsgemäßen Bauweise besteht darin, dass für alle großen Fahrzeuge nunmehr eine Standardisierung des Karosseriekonzeptes möglich ist. Die maximale Fahrzeuglänge für derartige Übertragungswagen ist gesetzlich festgelegt und beträgt maximal 13,5 m. Während man sich bei den bisher üblichen Bauweisen mit einschiebbaren Zusatzgehäusen bereits in der Angebotsphase bzw. Vorplanung auf eine feste Aufteilung festlegen musste, wird nunmehr gemäß der Erfindung die maximal mögliche Länge der Zusatzgehäuse ausgenutzt. Damit können dann auch in einem späteren Stadium kostenneutral noch Änderungen für den Innenausbau des Übertragungswagens vorgenommen werden, ohne dass dadurch das Gesamtkonzept geändert werden müsste. Da gemäß der Erfindung alle Wandungen der Zusatzgehäuse fest miteinander verbunden sind, können akustische Vorgaben einfacher erzielt werden. Die Erfindung ermöglicht somit erheblich mehr Platz für eine große Anzahl von Kameras und für entsprechend erforderliches vermehrtes Bedienungspersonal. Dies ist z.B. notwendig bei Fußball-, Formel 1- oder Tennisübertragungen, die in der Regel eine Vielzahl von Kameras erfordern.

Durch die Merkmale der Ansprüche 2 und 3 ergibt sich eine maximal mögliche Raumausnutzung eines in der Länge vorgegebenen Übertragungswagens, da damit der zur Verfügung stehende Raum maximal ausgenutzt wird. Eine derartige Bauweise ermöglicht somit praktisch eine Verdoppelung des Raumes im Hinblick auf das Kerngehäuse. Selbstverständlich könnten die beiden Zusatzgehäuse in Einschubrichtung auch kürzer ausgebildet werden, wenn dies für eine entsprechende Ausgestaltung erforderlich sein sollte.

Durch die Merkmale des Anspruches 4 wird verhindert, dass z.B. Feuchtigkeit in den Spalt eindringen kann.

Die Merkmale des Anspruches 5 beschreiben eine Bauweise, wobei im Deckenbereich des Kerngehäuses sichergestellt ist, dass auch in ausgefahrenem Zustand beider Zusatzgehäuse keine Feuchtigkeit, Regen oder Schnee eindringen kann.

Die Merkmale des Anspruches 6 beschreiben eine betriebssichere und zuverlässige Bauweise zum Ein- und Ausfahren der beiden Zusatzgehäuse.

Die Merkmale des Anspruches 1 beschreiben eine wirksame Entlüftung einer Bauweise, bei der z.B. eines der Zusatzgehäuse mit festinstallierten, wärmeerzeugenden Geräteschränken versehen ist.

In der Zeichnung sind in den Figuren 1 bis 4 Ausführungsbeispiele des Gegenstandes gemäß der Erfindung schematisch dargestellt.
Fig. 1 zeigt eine Draufsicht auf einen Übertragungswagen mit zwei seitlich angeordneten Zusatzgehäusen in ausgefahrenem Zustand,
Fig. 2 zeigt eine Draufsicht des Gehäuses Fig. 1 in eingefahrenem Zustand der beiden Zusatzgehäuse,
Fig. 3 zeigt einen Querschnitt durch den mittleren Teil des Übertragungswagens gemäß Fig. 1 in ausgefahrenem Zustand der beiden Zusatzgehäuse und
Fig. 4 zeigt einen zweiten Querschnitt.

Der Übertragungswagen enthält ein Kerngehäuse 10 und zwei an den beiden Seiten angeordnete, ein- und ausfahrbare Zusatzgehäuse 11 und 12. Das Kerngehäuse 10 besitzt einen Boden 13, eine Decke 14, zwei stirnseitige Außenwände 15 und zwei stirnseitige Innenwände 16. Das Kerngehäuse 10 ist an seinen beiden Längsseiten in Richtung auf die Zusatzgehäuse 11,12 offen ausgebildet, entsprechend sind auch die beiden Zusatzgehäuse 11 und 12 in Richtung auf das Kerngehäuse gesehen offen ausgebildet. Die Zusatzgehäuse 11,12 besitzen Böden 11a,12a, Längsseitenwände 11b,12b, Deckenwände 11c, 12c und Stirnwände 11d, 12d. Mit 17 sind Schienen unterhalb der Böden 13, 11a und 12a bezeichnet, auf denen die Zusatzgehäuse 11, 12 quer zur Wagenlängsrichtung ein- und ausschiebbar angeordnet sind. Beim Einschieben der Zusatzgehäuse 11, 12 werden die Böden 13, 11a, 12a teilweise hochgeklappt, wie durch Scharniere 11a', 12a' angedeutet ist. Die Bodenteile können auch als Faltelement ausgebildet sein. In anderen Räumen des Übertragungswagens können die Klapp- bzw. Faltelemente auch vollständig in den Zusatzgehäusen liegen. Die Scharniere werden also jeweils an den günstigsten Stellen angebracht, so daß die entsprechenden Bodenteile beim Einschieben der Zusatzgehäuse raumsparend hochgeklappt bzw. hochgefaltet angeordnet sind.

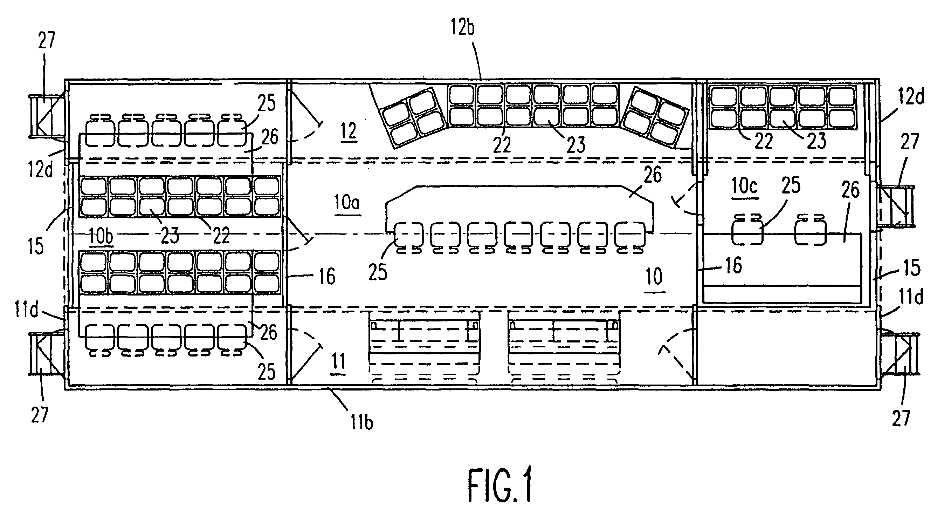

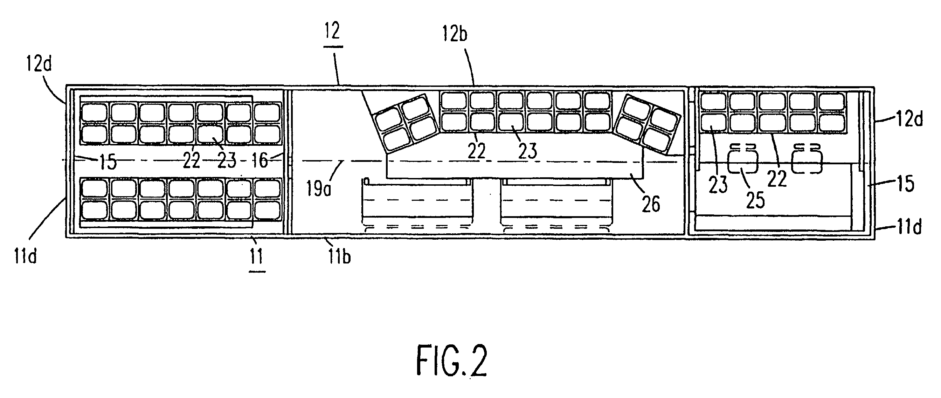

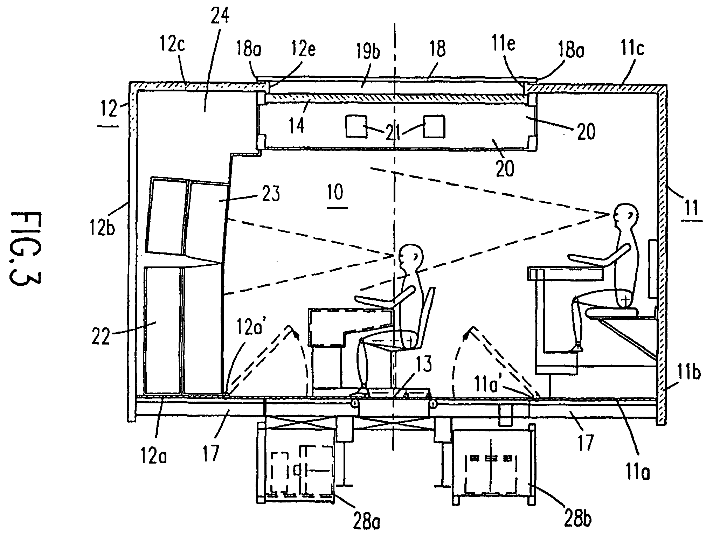

Aus Fig. 1 und 2 ist erkennbar, daß und wie die Stirnwände 11d, 12d der Zusatzgehäuse 11, 12 die stirnseitigen Außenwände 15 des Kerngehäuses 10 übergreifen. Aus Fig. 3 ist erkennbar, daß und wie die Deckenwände 11c, 12c der Zusatzgehäuse 11, 12 die Decke 14 des Kerngehäuses 10 übergreifen. Das Kerngehäuse 10 besitzt gemäß Fig. 3 oberhalb der Decke 14 eine feste Abdeckung 18, die die Breite des Kerngehäuses 10 überdeckt. Die Abdeckung 18 ist mit Abwinkelungen 18 a versehen, die mit flanschartigen Verlängerungen 11e, 12e der Zusatzgehäuse 11,12 zusammenwirken. Dadurch wird sowohl im zusammengeschobenen Zustand gemäß Fig. 2 ein zwischen den Zusatzgehäusen 11, 12 vorhandener Spalt 19a abgedichtet als auch eine zwischen den Deckenwänden 11c, 12c im ausgefahrenen Zustand entstandene Öffnung 19b.

Mit 20 ist ein vom Innenraum des Kerngehäuses 10 abgetrennter Raum bezeichnet, der u.a. Klimageräte 21 enthält. Das Zusatzgehäuse 12 besitzt festinstallierte Geräteschränke 22 mit eingebauten Monitoren 23. Die von den Geräteschränken 22 entwickelte Wärme wird in einen Freiraum 24 oberhalb der Geräteschränke 22 geleitet, der in ausgefahrenem Zustand des Zusatzgehäuses 12 mit dem Raum 20 in Verbindung steht. Damit ist auf einfache Weise eine wirksame Entwärmung und Entlüftung des Zusatzgehäuses 12 möglich.

Gemäß Fig. 1 und 2 dieses Ausführungsbeispiels enthält der mittlere Teil 10a des Übertragungswagens die Geräte zur Produktionskontrolle, während der linke Teil 10b die Geräte zur CCU und VTR-Kontrolle und der rechte Teil 10c die Geräte zur Audiokontrolle enthält. CCU ist die Abkürzung für Camera-Control-Unit und VTR ist die Abkürzung für Video Tape Recorder. Arbeitsplätze in dem Übertragungswagen sind in allen Teilen mit 25 und Arbeitstische mit 26 bezeichnet. In ausgefahrenem Zustand der beiden Zusatzgehäuse 11 und 12 sind stimseitig abnehmbare Treppen 27 vorgesehen. Unterhalb des Kerngehäuses 10 sind ein Klimagerät 28a und eine Batterieeinheit 28b angeordnet.

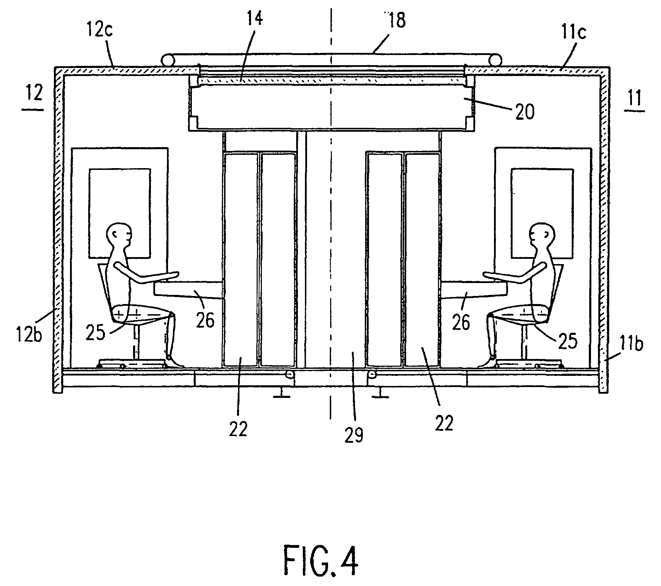

Fig. 4 zeigt einen Querschnitt des Ubertragungswagens durch den linken Teil 10b. Daraus ist ein großer Vorteil gemäß der Erfindung erkennbar, der darin besteht, dass man jetzt zwei Gestelleinheiten (Geräteschränke 22) mit einem ca. 50 cm breiten Servicegang 29 gegeneinander anordnen kann. Der Vorteil dabei liegt in sehr kurzen Verkabelungswegen und der Möglichkeit, bei auftretenden Störungen auch während der Produktion eingreifen zu können. Die beiden Gestelleinheiten können aus Gründen der besseren Wärmeabfuhr auch noch einmal jeweils in zwei Blöcke unterteilt werden.

## Patentansprüche

1. Übertragungswagen, mit einem Kerngehäuse (10) und mit auf den Längsseiten quer zur Längserstreckung ein- und ausfahrbar angeordneten Zusatzgehäusen (11, 12)
**dadurch gekennzeichnet, dass** ein vom Innenraum des Kerngehäuses (10) abgetrennter Raum (20) vorgesehen ist, der mit Klimageräten (21) bestückt ist, und dass mindestens ein Zusatzgehäuse (12) an seiner Außenwand (12b) mit fest installierten Geräteschränken (22) versehen ist, die mit einem Freiraum (24) in Verbindung stehen, in welchen die von den Geräteschränken (22) entwickelte Wärme gelangt, wobei der Freiraum (24) in ausgefahrenem Zustand des Zusatzgehäuses (12) so mit dem abgetrennten Raum (20) in Wirkverbindung steht, dass das Zusatzgehäuse (12) entwärmbar und entlüftbar ist.

2. Übertragungswagen nach Anspruch 1, **dadurch gekennzeichnet, dass** die an beiden Seiten angeordneten Zusatzgehäuse (11, 12) sich über die gesamte Länge und Höhe des Kerngehäuses (10) erstrecken und dass die zum Kerngehäuse (10) hin offenen Zusatzgehäuse (11, 12) mindestens mit ihren Decken- (11c, 12c) und Stirnwänden (11d, 12d) das Kerngehäuse (10) beim Ein- und Ausfahren umgreifen.

3. Übertragungswagen nach Anspruch 2, **dadurch gekennzeichnet, dass** die beiden Zusatzgehäuse (11, 12) so groß ausgebildet sind, dass sie mit ihren Decken-(11c, 12c) und Stirnwänden (11d, 12d) in eingefahrenem Zustand das Kerngehäuse (10) bis auf einen umlaufenden Spalt (19a) umschließen und eine durch den umlaufenden Spalt (19a) getrennte Außenhaut für das Kerngehäuse (10) gebildet wird.

4. Übertragungswagen nach Anspruch 3, **dadurch gekennzeichnet, dass** der umlaufende Spalt (19a) gegen Umwelteinflüsse abgedichtet ist.

5. Übertragungswagen nach Anspruch 3, **dadurch gekennzeichnet, dass** das Kerngehäuse (10) im Bereich seiner Decke (14) eine Abdeckung (18) aufweist, die sowohl den umlaufenden Spalt (19a) zwischen den Deckenwänden (11c, 12c) der Zusatzgehäuse (11, 12) in eingefahrenem Zustand als auch die in ausgefahrenem Zustand zwischen den Deckenwänden (11c, 12c) gebildete Öffnungen (19b) witterungsdicht übergreift.

6. Übertragungswagen nach Anspruch 1, **dadurch gekennzeichnet, dass** das Kerngehäuse (10) und/oder die Zusatzgehäuse (11, 12) mit zusammenwirkenden Schienen (17) zum Ein- und Ausfahren der Zusatzgehäuse (11, 12) versehen sind.

## Claims

1. Transmission vehicle having a core housing (10) and having additional housings (11, 12) which are arranged on the longitudinal sides such that they can be moved in and out transversely with respect to the longitudinal extent, **characterized in that** a space (20) is provided which is separated from the interior of the core housing (10) and is fitted with air conditioners (21), and **in that** at least one additional housing (12) is provided on its outer wall (12b) with permanently installed equipment cabinets (22) which are connected to a free space (24) to which the heat which is developed by the equipment cabinets (22) is passed, in which case the free space (24) is operatively connected, in the state when the additional housing (12) has been moved out, to the separated space (20) such that the additional housing (12) is cooled and ventilated.

2. Transmission vehicle according to Claim 1, **characterized in that** the additional housings (11, 12) which are arranged on both sides extend over the entire length and height of the core housing (10), and **in that** at least the ceiling walls (11c 12c) and end walls (11d 12d) of the additional housings (11, 12), which are open towards the core housing (10), engage around the core housing (10) while they are being moved in and out.

3. Transmission vehicle according to Claim 2, **characterized in that** the two additional housings (11, 12) are of such a size that, when they are in the moved-in state, their ceiling walls (11c, 12c) and end walls (11d 12d) surround the core housing (10) except for a circumferential gap (19a), and an outer skin, which is separated by the circumferential gap (19a), is formed for the core housing (10).

4. Transmission vehicle according to Claim 3, **characterized in that** the circumferential gap (19a) is sealed against environmental influences.

5. Transmission vehicle according to Claim 3, **characterized in that**, in the region of its ceiling (14), the core housing (10) has a cover (18) which engages in a weather-tight manner over both the circumferential gap (19a) between the ceiling walls (11c, 12c) and the additional housings (11, 12) when they are in the moved-in state, and around the openings (19b) which are formed between the ceiling walls (11c, 12c) when they are in the moved-out state.

6. Transmission vehicle according to Claim 1, **characterized in that** the core housing (10) and/or the additional housings (11, 12) are provided with interacting rails (17) for moving the additional housings (11, 12) in and out.

## Revendications

1. Véhicule de transmission comprenant une caisse centrale (10) et des caisses supplémentaires (11, 12) disposées sur les côtés longitudinaux, pouvant être rentrées et sorties transversalement à l'étendue longitudinale, **caractérisé en ce que** l'on prévoit un espace (20) séparé de l'espace interne de la caisse centrale (10), qui est équipé d'appareils de climatisation (21), et **en ce qu'**au moins une caisse supplémentaire (12) est pourvue sur sa paroi extérieure (12b) d'armoires d'instruments (22) installées fixement, qui sont raccordées à un espace libre (24), dans lequel parvient la chaleur créée par les armoires d'instruments (22), l'espace libre (24) coopérant dans l'état déployé de la caisse supplémentaire (12) avec l'espace séparé (20) de telle sorte que la caisse supplémentaire (12) puisse disposer d'une dissipation de la chaleur et d'une ventilation.

2. Véhicule de transmission selon la revendication 1, **caractérisé en ce que** les caisses supplémentaires (11, 12) disposées des deux côtés s'étendent sur toute la longueur et la hauteur de la caisse centrale (10) et **en ce que** les caisses supplémentaires (11, 12) ouvertes vers la caisse centrale (10) viennent en prise au moins avec leurs parois de plafond (11c, 12c) et leurs parois frontales (11d, 12d) autour de la caisse centrale (10) lors de la rentrée et de la sortie.

3. Véhicule de transmission selon la revendication 2, **caractérisé en ce que** les deux caisses supplémentaires (11, 12) sont réalisées avec une dimension telle qu'elles entourent, avec leurs parois de plafond (11c, 12c) et leurs parois frontales (11d, 12d), la caisse centrale (10) dans l'état rentré jusqu'à une fente périphérique (19a) et qu'une peau extérieure séparée par la fente périphérique (19a) soit créée pour la caisse centrale (10).

4. Véhicule de transmission selon la revendication 3, **caractérisé en ce que** la fente périphérique (19a) est rendue étanche contre les influences environnementales.

5. Véhicule de transmission selon la revendication 3, **caractérisé en ce que** la caisse centrale (10) présente, dans la région de son plafond (14), un recouvrement (18) qui vient en prise par le dessus, de manière étanche aux intempéries, avec la fente périphérique (19a) entre les parois de plafond (11c, 12c) des caisses supplémentaires (11, 12) dans l'état rentré et avec les ouvertures (19b) formées entre les parois de plafond (11c, 12c) dans l'état déployé.

6. Véhicule de transmission selon la revendication 1, **caractérisé en ce que** la caisse centrale (10) et/ou les caisses supplémentaires (11, 12) sont pourvues de rails coopérant (17) pour la rentrée et la sortie des caisses supplémentaires (11, 12).
